# EUROPÄISCHE PATENTSCHRIFT

(11) **EP 0 356 759 B1**
(45) Veröffentlichungstag und Bekanntmachung des Hinweises auf die Patenterteilung: **02.03.1994**
(21) Anmeldenummer: 89114494.1
(22) Anmeldetag: 05.08.1989
(51) Int. Cl.: B23Q 39/04, B23B 3/30

(54) **Drehmaschine mit axial sich gegenüberliegenden Werkstückspindeln**
Lathe with concentrically disposed work piece spindles
Machine à tourner muni de broches concentriques et opposées

(30) Priorität: 02.09.1988 DE 3829857
(43) Veröffentlichungstag der Anmeldung: 07.03.1990
(73) Patentinhaber: Gildemeister AG, D-33689 Bielefeld (DE)
(72) Erfinder: Göhren, Horst, Dr.-Ing., D-4800 Bielefeld 12 (DE)
(74) Vertreter: Thielking, Bodo, Dipl.-Ing.

(56) Entgegenhaltungen:
- FR-A- 1 196 335
- US-A- 2 611 290
- US-A- 4 719 676

## Beschreibung

Die Erfindung betrifft eine Drehmaschine nach dem Oberbegriff des Anspruchs 1.

Bei einer bekannten Drehmaschine dieser Art (US-A 4,719,676) sind auf einer gemeinsamen Führung des Maschinenbetts einander gegenüberliegende und in ihren Drehachsen miteinander fluchtend jeweils zwei Werkstückspindeln gemeinsam in Längsachsenrichtung verfahrbar angeordnet. Die Werkstückaufnahmen der jeweils doppelt vorgesehenen Werkstückspindeln weisen von unterschiedlichen Seiten in Richtung auf eine auf der gemeinsamen Längsführung in Längsachsenrichtung verschiebbaren Längsschlitten. Auf dem Längsschlitten können zwei Planschlitten mit Revolvern für die Werkzeuge angeordnet sein.

Trotz des Aufwandes, der dadurch entsteht, daß alle vier Werkstückspindeln in Längsachsenrichtung verfahrbar sind, ist die Produktivität dieser Maschine nicht ausreichend hoch.

Eine weitere bekannte Drehmaschine (DE-PS 30 35 451) besitzt eine ortsfest drehbar angeordnete erste Werkstückspindel und eine koaxial zu dieser in axialer Richtung bewegliche zweite Werkstückspindel, die der ersten Werkstückspindel entgegengerichtet ist. Bei dieser Drehmaschine sind zwei auf Kreuzschlitten angeordnete Werkzeugrevolver vorgesehen, deren Schaltachsen parallel zur Spindelachse verlaufen. Die Werkzeugrevolver tragen Werkzeuge für die Bearbeitung von sowohl an der ersten wie an der zweiten Werkstückspindel eingespannten Werkstücken. Dabei ist die axial bewegliche zweite Werkstückspindel auf der Längsschlitten-Führungsbahn eines der Kreuzschlitten geführt. Diese bekannte Maschine erlaubt bereits eine freizügige Bearbeitung der Werkstücke an jeder Spindel mit jedem der beiden Werkzeugträger. So kann während des Werkstückbeladevorgangs an der einen Werkstückspindel und während des Entladevorgangs an der gegenüberliegenden Werkstückspindel an der jeweils anderen Spindel eine vierachsige Bearbeitung, d. h. eine gleichzeitige Bearbeitung eines Werkstücks mit zwei Werkzeugen, ausgeführt werden. Da sich jedoch zahlreiche Bearbeitungsvorgänge gegenseitig ausschließen, ist die Produktivität auch dieser Maschine noch nicht in allen Fällen ausreichend hoch.

Ausgehend von dem eingangs erwähnten Stand der Technik liegt der Erfindung die Aufgabe zugrunde, eine Drehmaschine der als bekannt vorausgesetzten Art so auszubilden, daß sie eine Steigerung der Produktivität erlaubt, ohne den maschinentechnischen Aufwand sehr stark zu erhöhen.

Die Lösung dieser Aufgabe erfolgt mit den Merkmalen des Anspruchs 1.

Bei der erfindungsgemäßen Drehmaschine kann jeder Werkzeugträger gleichzeitig wechselweise an zwei Werkstückspindeln arbeiten. Dadurch ist eine gegenseitige Beeinflussung der Bearbeitung ausgeschlossen. Die Werkzeugträger können also mit Ausnahme der Zeit, die für die Übergabe des Werkstücks von der einen Werkstückspindel an die jeweils gegenüberliegende benötigt wird, ständig im Einsatz sein. Wenn die verschieblichen Werkstückspindeln gemäß einem weiteren Merkmal der Erfindung in einem gemeinsamen Spindelkasten angeordnet sind, können sie sogar vom gleichen Hauptantrieb angetrieben werden.

Wenn verschiedene Werkstücke an beiden Werkstückspindeln bearbeitet werden sollen, müssen die Werkstückspindeln unabhängig voneinander antreibbar und verschiebbar sein. Auch in einem solchen Fall ist der Aufwand im Verhältnis zum erzielten Nutzen vergleichsweise gering.

Die Anordnung der Längsschlittenführungsbahnen zu beiden Seiten der feststehenden Werkstückspindeln, also zu beiden Seiten des ortsfesten Spindelkastens, schafft einen großen Abstand der Längsschlittenführungsbahnen, auf denen sowohl die unterschiedlichen Kreuzschlitten, als auch die in Drehachsrichtung verschiebbaren Werkstückspindeln geführt sind. Wenn die Längsschlitten-Führungsbahnen sich bis zur Rückseite des ortsfesten Spindelkastens fortsetzen, ist eine reibungslose Werkstückübergabe auch bei vier beteiligten Werkstückspindeln möglich, weil sie das Verfahren der Werkzeugträger neben die feststehenden Werkstückspindein ermöglicht. Hierdurch werden die Längsschlitten-Führungsbahnen für die Verschiebung der beweglichen Werkstückspindeln freigegeben.

Nachstehend wird eine bevorzugte Ausführungsform der Erfindung anhand der Zeichnung im einzelnen erläutert. Es zeigen:

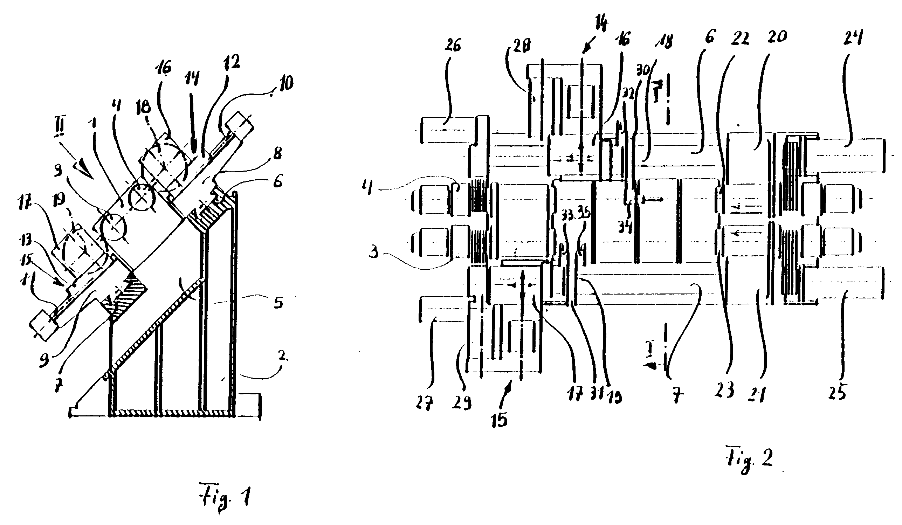

- Figur 1 -: einen schematischen Querschnitt entlang Ebene I - I in Figur 2,
- Figur 2 -: eine Ansicht gemäß Pfeil II in Figur 1.

Die dargestellte Drehmaschine ist eine Schrägbettdrehmaschine mit einem auf dem Maschinenbett 2 befestigten Spindelkasten, in dem eine erste Werkstückspindel 3 und eine dritte Werkstückspindel 4 gelagert sind. Unterhalb des Spindelkastens 1 ist ein Späneschacht 5 vorgesehen. Das Maschinenbett 2 besitzt zwei Längsschlitten-Führungsbahnen 6 und 7, auf denen Längsschlitten 8 bzw. 9 angeordnet sind, die ihrerseits Querführungen 10 bzw. 11 für Planschlitten 12 bzw. 13 tragen.

Von dem Längsschlitten 8 und dem Planschlitten 12 wird ein Kreuzschlitten 14 gebildet. Von dem Längsschlitten 9 und dem Planschlitten 13 wird ein Kreuzschlitten 15 gebildet.

Die Schaltachsen 18 und 19 der Werkzeugrevolver 16 und 17 verlaufen horizontal und parallel zu den Achsen der ortsfest drehbar angeordneten Werkstückspindeln 3 und 4.

Auf den Längsschlitten-Führungsbahnen 6 und 7 sind ebenfalls in Längsrichtung verschiebliche Spindelkästen 20 und 21 geführt. Im Spindelkasten 20 ist eine vierte Werkstückspindel 22 drehbar gelagert, im Spindelkasten 21 eine zweite Werkstückspindel 23.

Die Werkstückspindeln 22 bzw. 23 werden über Motoren 24 bzw. 25 angetrieben. Die Spindelkästen 20 und 21 können durch nicht dargestellte Vorschubmotoren und Vorschubgetriebe unabhängig voneinander auf den Längsschlitten-Führungsbahnen 6 bzw. 7 verschoben werden.

Die Längsschlitten 8 bzw. 9 werden durch die Vorschubmotoren 26 bzw. 27 angetrieben, die Querschlitten 12 bzw. 13 durch die Vorschubmotoren 28 bzw. 29. Die Werkzeugrevolver 16 bzw. 17 tragen Revolverscheiben 30 bzw. 31, an denen verschiedene Bearbeitungswerkzeuge 30, 33, 34 und 35 befestigt sind, welche in Figur 2 beispielhaft dargestellt sind.

Das linke Werkzeug 32 des oberen Werkzeugrevolvers 16 ist auf die feststehende dritte Werkstückspindel 4 ausgerichtet und dazu bestimmt, ein von dieser dritten Werkstückspindel gehaltenes Werkstück zu bearbeiten. Die Bohrstange 34 des Werkzeugrevolvers 16 ist auf die verfahrbare Werkstückspindel 22 gerichtet und bearbeitet das dort eingespannte, nicht dargestellte Werkstück.

In entsprechender Weise ist das linke Werkzeug 33 des unteren Werkzeugrevolvers 17 gegen die feststehende erste Werkstückspindel 3 gerichtet und zur Bearbeitung des in der Werkstückspindel 3 gehaltenen Werkstücks vorgesehen. Das Werkzeug 35 dient zur Bearbeitung des Werkstücks, welches in die Werkstückspindel 23 eingespannt wird. Es ist auch denkbar, an beiden Werkstückspindeln 3 und 23 mit demselben Werkzeug 33 zu arbeiten, es müßte dann lediglich das Werkzeug 35 entfernt werden.

Aus der Darstellung ist ersichtlich, daß eine gegenseitige Beeinflussung ausgeschlossen ist und die Bearbeitung auch während der Lade- bzw. Entladezeit an der jeweils anderen Werkstückspindel fortgesetzt werden kann.

## Patentansprüche

1. Drehmaschine mit einer drehbar in einem Spindelkasten (1) angeordneten ersten Werkstückspindel (3) und einer koaxial zu dieser in axialer Richtung beweglichen zweiten Werkstückspindel (23), die der ersten Werkstückspindel (3) entgegengerichtet ist, mit zwei auf Kreuzschlitten (14; 15) angeordneten Werkzeugrevolvern (16; 17), die Werkzeuge für die Bearbeitung von sowohl an der ersten als auch an der zweiten Werkstückspindel (23) eingespannten Werkstücken tragen, wobei die axial bewegliche zweite Werkstückspindel (23) auf der Führungsbahn eines Kreuzschlittens (15) geführt ist und wobei parallel zur ersten Werkstückspindel (3) eine dritte in einem Spindelkasten (1) angeordnete Werkstückspindel (4) drehbar angeordnet ist und der dritten Werkstückspindel (4) eine in deren Drehachsrichtung verschiebliche vierte Werkstückspindel (22) koaxial entgegengerichtet ist, welche auf mindestens einer Längsschlitten-Führungsbahn (6) eines Kreuzschlittens (14) geführt ist,
dadurch gekennzeichnet,
daß die beiden Kreuzschlitten (14; 15) auf unterschiedlichen Längschlitten-Führungsbahnen (6; 7) angeordnete separate Längsschlitten (8; 9) aufweisen, wobei die erste Werkstückspindel (3) und die dritte Werkstückspindel (4) ortsfest sind und die beiden unabhängigen Kreuzschlitten (14; 15) jeweils Werkzeugrevolver (16; 17) tragen, deren Schaltachsen (18; 19) parallel zu den Achsen der ortsfest drehbar angeordneten Werkstückspindeln (3; 4) verlaufen, wobei die Längsschlitten-Führungsbahnen (6; 7) zu beiden Seiten des jeweils ortsfesten Spindelkastens (1) verlaufen.

2. Drehmaschine nach Anspruch 1,
dadurch gekennzeichnet,
daß die vierte Werkstückspindel (22) und die zweite Werkstückspindel (23) in einem gemeinsamen Spindelkasten untergebracht sind.

3. Drehmaschine nach Anspruch 1 oder 2,
dadurch gekennzeichnet,
daß die vierte Werkstückspindel (22) auf derselben Längsschlitten-Führungsbahn (7) wie die zweite Werkstückspindel (23) geführt ist.

4. Drehmaschine nach Ansprüchen 1 und 2,
dadurch gekennzeichnet,
daß die vierte Werkstückspindel (22) auf der Längsschlitten-Führungsbahn (6) für den Kreuzschlitten (14) geführt ist, welcher der dritten und vierten Werkstückspindel (4 und 22) zugeordnet ist.

5. Drehmaschine nach einem oder mehreren der Ansprüche 1 bis 4,
dadurch gekennzeichnet,
daß die erste und dritte Werkstückspindel (3 und 4) in einem gemeinsamen Spindelkasten (1) angeordnet sind.

## Claims

1. Lathe with a first workpiece spindle (3) mounted rotatable in a movable headstock (1) and a second workpiece spindle (23) movable coaxial with the first in the axial direction wherein the second spindle is directed opposite the first spindle (3) and two tool turrets (16; 17) are mounted on cross slides (14;15) to support the tools for processing the workpieces clamped both on the first and on the second workpiece spindles (23) wherein the axially movable second workpiece spindle (23) is guided on the guide path of a cross slide (15) and wherein a third workpiece spindle (4) mounted in a movable headstock (1) is mounted rotatable parallel to the first workpiece spindle (3) and wherein a fourth workpiece spindle (22) displaceable in the rotary axial direction is directed coaxially opposite the third workpiece spindle (4) and is guided on at least one longitudinal slide guide track (6) of a cross slide (14),
characterised in that the two cross slides (14, 15) have separate longitudinal slides (8;9) mounted on different longitudinal slide guide tracks (6;7) wherein the first workpiece spindle (3) and the third workpiece spindle (4) are locally fixed and the two independent cross slides (14; 15) each support tool turrets (16; 17) whose switch axes (18; 19) run parallel to the axes of the workpiece spindles (3;4) which are mounted rotatable but locally fixed wherein the longitudinal slide guide tracks (6;7) run either side of each locally fixed headstock (1).

2. Lathe according to claim 1
characterised in that the fourth workpiece spindle (22) and the second workpiece spindle (23) are mounted in a common headstock.

3. Lathe according to claim 1 or 2
characterised in that the fourth workpiece spindle (22) is guided on the same longitudinal slide guide track (7) as the second workpiece spindle (23).

4. Lathe according to claims 1 and 2
characterised in that the fourth workpiece spindle (22) is guided on the longitudinal slide guide track (6) for the cross slide (14) which is associated with the third and fourth workpiece spindles (4 and 22).

5. Lathe according to one or more of claims 1 to 4
characterised in that the first and third workpiece spindles (3 and 4) are mounted in a common headstock (1).

## Revendications

1. Tour muni d'une première broche (3), disposée, pivotante, dans une poupée (1) et d'une deuxième contre-broche (23), qui est disposée coaxialement par rapport à la première et est mobile en sens axial, avec deux tourelles (16; 17), installées sur les trainards de montant porte-broche (14; 15), lesquelles tourelles portent des outils destinés au travail des pièces à usiner, maintenues aussi bien par la première broche (3) que par la deuxième broche (23), la deuxième broche (23), mobile axialement, étant conduite sur la glissière de guidage d'un trainard (15) et une troisième broche (4), rotative, étant disposée parallèlement à la première broche (3), et une quatrième broche (22), déplaçable dans le sens de son axe de révolution, étant opposée coaxialement à la troisième broche (4) et conduite, au moins, sur une glissière de guidage longitudinale (6) d'un trainard (14),
caractérisé par le fait
que les deux trainards (14; 15) présentent des chariots longitudinaux (8; 9) indépendants, disposés sur différentes glissières de guidage longitudinales (6; 7), la première broche (3) et la troisième broche (4) étant fixes et les deux trainards de montant porte-broche (14; 15) indépendants portant, respectivement, des tourelles (16; 17), dont les axes de commutation (18; 19) s'étendent parallèlement aux axes des broches fixes, pivotantes (3; 4), et les glissières de guidage longitudinales (6; 7) s'étendant des deux côtés de la poupée fixe (1).

2. Tour selon revendication 1,
caractérisé par le fait
que la quatrième broche (22) et la deuxième broche (23) sont logées dans une poupée (1) commune.

3. Tour selon revendication 1,
caractérisé par le fait
que la quatrième broche (22) est conduite sur la même glissière de guidage (7) que la deuxième broche (23).

4. Tour selon revendication 1,
caractérisé par le fait
que la quatrième broche (22) est conduite sur la glissière de guidage (6) du trainard du montant porte-broche (14), qui est affecté à la troisième et à la quatrième broche (4 et 22)

5. Tour selon revendication 1,
caractérisé par le fait
que la première broche (3) et la troisième broche (4) sont installées dans une poupée (1) commune.
